(19) Europäisches Patentamt European Patent Office Office européen des brevets

(11) **EP 4 621 857 A1**

(12) **EUROPEAN PATENT APPLICATION**

(43) Date of publication:
24.09.2025 Bulletin 2025/39

(21) Application number: 25164588.3

(22) Date of filing: 18.03.2025

(51) International Patent Classification (IPC):
*H01M 4/02* *(2006.01)*

(52) Cooperative Patent Classification (CPC):
**H01M 4/02;** H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 19.03.2024 KR 20240037822

(71) Applicants:
• SK On Co., Ltd.
Seoul 03161 (KR)
• SK innovation Co., Ltd.
Seoul 03188 (KR)

(72) Inventors:
• MOON, Joon Hyung
34124 Daejeon (KR)
• PARK, Gwi Ok
34124 Daejeon (KR)
• KIM, Nak Won
34124 Daejeon (KR)
• YU, Do Ae
34124 Daejeon (KR)

(74) Representative: Stolmár & Partner
Patentanwälte PartG mbB
Blumenstraße 17
80331 München (DE)

(54) **ANODE ACTIVE MATERIAL FOR LITHIUM SECONDARY BATTERY, METHOD OF PREPARING THE SAME AND LITHIUM SECONDARY BATTERY INCLUDING THE SAME**

(57) An anode active material for a lithium secondary battery according to embodiments of the present disclosure includes composite particles which comprise a silicon-containing coating formed on a surface of carbon-based particles comprising porous, wherein the composite particles have a C/SiC peak intensity ratio of 1.0 to 4.5, which is measured through X-ray diffraction analysis after performing heat treatment on the composite particles at 900°C to 1200 °C for 6 hours to 9 hours. A method of preparing an anode active material for a lithium secondary battery according to embodiments of the present disclosure comprise preparing preliminary carbon-based particles including pores; performing first calcination on the preliminary carbon-based particles with a hydrogen-containing gas to form carbon-based particles; and performing second calcination on the carbon-based particles with a silicon-containing gas to form composite particles which comprise a silicon-containing coating formed on a surface of the carbon-based particles, wherein the composite particles have a C/SiC peak intensity ratio of 1.0 to 4.5, which is measured through X-ray diffraction analysis after performing heat treatment on the composite particles at 900°C to 1200 °C for 6 hours to 9 hours.

[FIG. 1]

**Description**

[BACKGROUND OF THE INVENTION]

1. Field of the Invention

The disclosure of the present application relates to an anode active material for a lithium secondary battery, a method of preparing the same, and a lithium secondary battery including the anode active material.

2. Description of the Related Art

A secondary battery is a rechargeable battery that can be repeatedly charged and discharged. With the rapid progress in the information, communication, and display industries, secondary batteries have been widely applied as power sources for various portable electronic devices such as camcorders, mobile phones, and laptops. Recently, battery packs containing secondary batteries have also been developed and applied as power sources for eco-friendly automobiles like electric vehicles and hybrid vehicles.

Examples of secondary batteries include lithium secondary batteries, nickel-cadmium batteries, nickel-hydrogen batteries, and the like. Among them, lithium secondary batteries are notable for their high operating voltage, high energy density per unit weight, fast charging speed, and light weight, which have led to their continued development and application.

Recently, as the applications of lithium secondary batteries have expanded, development efforts have focused on creating lithium secondary batteries with higher capacity and output. For instance, a high-capacity composite compound of silicon and carbon may be prepared and used as an anode active material.

However, since a silicon-carbon composite anode active material has a significant difference in volume expansion rate, cracks in the anode active material and exposure to the electrolyte may occur due to repeated charging and discharging.

[SUMMARY OF THE INVENTION]

According to an embodiment of the present disclosure, i an anode active material for a lithium secondary battery having improved capacity characteristics, output characteristics and lifespan characteristics is provided.

According to another embodiment of the present disclosure, a method of preparing an anode active material for a lithium secondary battery having improved capacity characteristics, output characteristics and lifespan characteristics is provided.

In addition, according to another embodiment of the present disclosure, a lithium secondary battery having improved capacity characteristics, output characteristics and lifespan characteristics, which includes the anode active material is provided.

To achieve the above advantages, an anode active material for a lithium secondary battery according to an embodiment of the present disclosure includes composite particles which comprise a silicon-containing coating formed on a surface of carbon-based particles comprising porous. The composite particles have a C/SiC peak intensity ratio of 1.0 to 4.5, which is defined by Equation 1 below after performing heat treatment on the composite particles at 900°C to 1200 °C for 6 hours to 9 hours:

$$[\text{Equation 1}]$$

$$\text{C/SiC peak intensity ratio} = \text{I(C)/I(SiC)}.$$

In Equation 1, I(C) is a maximum peak intensity in a $2\theta$ range of 20° to 23° measured through X-ray diffraction (XRD) analysis, I(SiC) is a maximum peak intensity in a $2\theta$ range of 34° to 37° measured through the XRD analysis, and $2\theta$ is a diffraction angle (°).

In some embodiments, the C/SiC peak intensity ratio may be 2.9 to 4.1.

In some embodiments, the heat treatment may be performed on 1 g to 5 g of the composite particles in an inert atmosphere.

In some embodiments, the pores of the carbon-based particles may have a size of 0.1 nm to 10 nm.

In some embodiments, the composite particles may further include a carbon coating formed on the silicon-containing coating.

In some embodiments, the pores of the carbon-based particles may include a shape recessed from the outermost portion of the carbon-based particles into an inside of the carbon-based particles.

In some embodiments, the silicon included in the silicon-containing coating may have a crystal grain size of 10 nm or less, which is measured through the XRD analysis after performing heat treatment on the composite particles at 900 °C to 1200 °C for 6 hours to 9 hours.

In some embodiments, the crystal grain size of the silicon included in the silicon-containing coating may be measured through Equation 2 below:

[Equation 2]

$$L = \frac{0.9\lambda}{\beta cos\theta}.$$

In Equation 2, L is the grain size (nm), $\lambda$ is an X-ray wavelength (nm), $\beta$ is a full width at half maximum (rad) of a peak of a (111) plane of the silicon included in the silicon-containing coating, and $\theta$ is the diffraction angle (rad).

In some embodiments, the grain size of the silicon included in the silicon-containing coating measured through the XRD analysis after heat treatment may be 8 nm or less.

In some embodiments, the silicon included in the silicon-containing coating after heat treatment may include an amorphous structure.

A lithium secondary battery according to another embodiment of the present disclosure includes: an anode which includes the above-described anode active material for a lithium secondary battery; and a cathode disposed to face the anode.

In accordance with a method of preparing an anode active material for a lithium secondary battery according to another embodiment of the present disclosure, preliminary carbon-based particles including pores are prepared. First calcination is performed on the preliminary carbon-based particles with a hydrogen-containing gas to form carbon-based particles. Second calcination is performed on the carbon-based particles with a silicon-containing gas to form composite particles which include a silicon-containing coating formed on a surface of the carbon-based particles. The composite particles have a C/SiC peak intensity ratio of 1.0 to 4.5, which is defined by Equation 1 below after performing heat treatment on the composite particles at 900 °C to 1200 °C for 6 hours to 9 hours:

[Equation 1]

C/SiC peak intensity ratio = I(C)/I(SiC).

In Equation 1, I(C) is a maximum peak intensity in a 2$\theta$ range of 20° to 23° measured through X-ray diffraction (XRD) analysis, I(SiC) is a maximum peak intensity in a 2$\theta$ range of 34° to 37° measured through the XRD analysis, and 2$\theta$ is a diffraction angle (°)).

In some embodiments, the first calcination may be performed at a temperature of 300 °C to 700 °C.

In some embodiments, the second calcination may be performed at a temperature of 400 °C to 600 °C.

According to an embodiment of the present disclosure, gas generation due to a side reaction between the anode active material and an electrolyte may be suppressed, and lifespan characteristics of the secondary battery may be improved.

According to an embodiment of the present disclosure, formation of a SiC phase after heat treatment may be suppressed, thereby improving capacity characteristics, output characteristics and lifespan characteristics under a high-temperature environment or during repeated charging and discharging.

The anode active material for a lithium secondary battery and the lithium secondary battery including the same of the present disclosure may be widely applied to green technology fields such as an electric vehicle, and a battery charging station, as well as other solar power generation and wind power generation using the batteries. The anode active material for a lithium secondary battery and the lithium secondary battery including the same of the present disclosure may be used in an eco-friendly electric vehicle, and a hybrid vehicle, etc., which are intended to prevent climate change by suppressing air pollution and greenhouse gas emissions.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a schematic cross-sectional view illustrating a composite particle according to embodiments of the present disclosure;

FIG. 2 is a flowchart for describing processes in a method of preparing an anode active material for a lithium secondary battery according to embodiments of the present disclosure;

FIGS. 3 and 4 are a schematic plan view and a cross-sectional view illustrating a lithium secondary battery according to embodiments of the present disclosure, respectively;

FIG. 5 is an X-ray diffraction (XRD) analysis graph before heat treatment of composite particles; and

FIG. 6 is an XRD analysis graph after heat treatment of the composite particles.

[DETAILED DESCRIPTION OF THE INVENTION]

Embodiments of the present disclosure provide an anode active material for a lithium secondary battery (hereinafter, may abbreviated as an "anode active material") including composite particles. In addition, a method of preparing the anode active material is provided. In addition, a lithium secondary battery (hereinafter, may abbreviated as a "secondary battery") including the anode active material is provided.

Hereinafter, the embodiments of the present disclosure will be described in detail. However, these embodiments are merely an example, and the present disclosure is not limited to the specific embodiments described as the example.

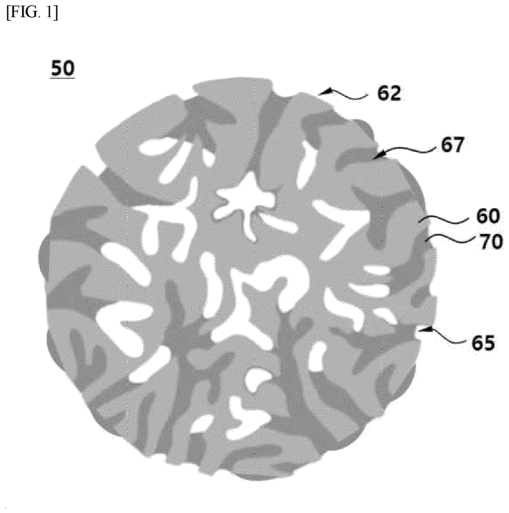

FIG. 1 is a schematic cross-sectional view illustrating a composite particle according to embodiments of the present disclosure.

FIG. 1 schematically illustrates a shape of the composite particle for the convenience of description, but the structure/shape of the composite particle of the present disclosure are not limited to those shown in FIG. 1. For example, the cross-section of the carbon-based particle may be randomly changed from a circle. In addition, a silicon-containing coating may be partially formed on the pores and the surface of the carbon-based particles, and may be formed as a plurality of discontinuous islands or patterns.

Referring to FIG. 1, a composite particle 50 may include a carbon (C)-based particle 60 and a silicon (Si)-containing coating 70. For example, the anode active material may include a plurality of composite particles 50.

In some embodiments of the present disclosure, the carbon-based particle 60 may include pores 65. For example, the carbon-based particle 60 may be a porous particle including a plurality of pores.

In some embodiments, the carbon-based particle 60 may include activated carbon, carbon nanotubes, carbon nanowires, graphene, carbon fibers, carbon black, graphite, porous carbon, pyrolyzed cryogel, pyrolyzed xerogel, pyrolyzed aerogel and the like. These may be used alone or in combination of two or more thereof.

In some embodiments, the above-described carbon-based particle 60 may include an amorphous structure or a crystalline structure.

According to an embodiment, the carbon-based particle 60 may include an amorphous structure. Thereby, durability of the anode active material may be increased, and an occurrence of cracks may be suppressed during charging and discharging or when an external impact is applied. Accordingly, the lifespan characteristics of the secondary battery may be improved.

In some embodiments, the pores 65 of the carbon-based particle 60 may include a shape recessed from the outermost portion of the carbon-based particle 60 into an inside of the carbon-based particle 60. For example, the pores 65 may include open pores which are open to an outside of the carbon-based particle 60.

In some embodiments, the pores 65 of the carbon-based particle 60 may have a size of 0.1 nm to 10 nm, 0.5 nm to 8 nm, or 1 nm to 5 nm. Within the above range, excessive deposition of silicon may be prevented, such that an occurrence of cracks in the anode active material during charging and discharging of the secondary battery may be further suppressed.

According to an embodiment, the size of the pore 65 may be measured using a surface area analyzer (ASAP-2420) of Micromeritics. For example, the size of the pore 65 may be determined by measuring a maximum peak position of the Barrett-Joyner-Halenda (BJH) pore size distribution curve obtained from the nitrogen gas sorption isotherm of the carbon-based particle 60 sample.

A silicon-containing coating 70 may be formed on the surface of carbon-based particle 60 including the pores 65. For example, volume expansion of silicon included in the silicon-containing coating 70 may be alleviated by the pores 65. Accordingly, cracks due to a difference in the volume expansion rates between carbon (e.g., about 150% by volume ("vol %") or less) and silicon (e.g., about 400 vol % or more) during charging and discharging of the battery may be prevented while employing relatively high capacity characteristics of silicon. Accordingly, gas generation due to a side reaction between the anode active material and the electrolyte may be suppressed, and the lifespan characteristics of the secondary battery may be improved.

The size of pore 65 may refer to a diameter of an entrance of the pore 65 formed in the surface of carbon-based particle 60.

The term(s) the "surface of carbon-based particles" and/or "surface of carbon-based particles 60" as used herein may refer to an outer surface 62 of carbon-based particle 60, an inner surface 67 of the pores 65, or the outer surface 62 of carbon-based particle 60 and the inner surface 67 of the pores 65.

For example, the silicon-containing coating 70 may be formed on at least a portion of the outer surface 62 of the carbon-based particle 60.

For example, the silicon-containing coating 70 may be formed on at least a portion of the inner surface 67 of the pores 65 of the carbon-based particle 60.

For example, the silicon-containing coating 70 may be formed on at least a portion of the outer surface 62 of the carbon-based particle 60 and at least a portion of the inner surface 67 of the pores 65.

In some embodiments, the silicon-containing coating 70 may include silicon, and optionally further include $SiO_x$ (0<x<2).

In some embodiments, the composite particles 50 may further include a carbon coating (not shown) formed on the silicon-containing coating 70. Accordingly, contact between silicon of the anode active material and water may be prevented. Accordingly, a decrease in the discharge capacity and capacity efficiency of the secondary battery may be suppressed before formation of the anode after preparation of the anode active material.

In some embodiments, the carbon coating may be formed even on a portion of the surface of the carbon-based particle 60 where the silicon-containing coating 70 is not formed. For example, the carbon coating may entirely cover the carbon-based particles 60 and the silicon-containing coating 70. Accordingly, mechanical stability and chemical stability of the anode active material may be improved.

In an embodiment, the carbon coating may include at least one of carbon and a conductive polymer. For example, the conductive polymer may include polyacetylene, polyaniline, polypyrrole, polythiophene and the like.

According to embodiments of the present disclosure, the composite particles 50 may have a C/SiC peak intensity ratio of 1.0 to 4.5, and in some embodiments, 2.9 to 4.1, which is defined by Equation 1 below after performing heat treatment on the composite particles at 900 °C to 1200 °C for 6 hours to 9 hours.

$$[Equation\ 1]$$

$$C/SiC\ peak\ intensity\ ratio = I(C)/I(SiC)$$

In Equation 1, I(C) is a maximum peak intensity in a 2θ range of 20° to 23° measured through X-ray diffraction (XRD) analysis. I(SiC) is a maximum peak intensity in a 2θ range of 34° to 37° measured through the XRD analysis. 2θ is a diffraction angle (°).

For example, I(C) of Equation 1 may represent a peak intensity of carbon included in the composite particle 50. I(SiC) may represent a peak intensity of silicon carbide (SiC) included in the composite particle 50 after heat treatment.

Within the above C/SiC peak intensity ratio range, the formation and growth of a SiC phase after heat treatment may be suppressed, thereby improving the capacity characteristics, output characteristics and lifespan characteristics under a high-temperature environment or during repeated charging and discharging.

In some embodiments, the heat treatment may be performed on 1 g to 5 g of the composite particles 50 in an inert atmosphere. Accordingly, reliability and reproducibility of measurement results may be improved by uniformly maintaining heat treatment conditions.

The heat treatment is not included in the preparation process of the composite particles 50, and may be performed on the finished product of the composite particles 50. Accordingly, accuracy of evaluation of the high-temperature lifespan characteristics and cycle characteristics of the anode active material may be improved.

For example, the composite particles 50 subjected to the heat treatment may be naturally cooled to room temperature, followed by performing XRD analysis thereon.

Hereinafter, the term "heat treatment" as used herein may mean a heat treatment performed under the above-described conditions (at 900 °C to 1200 °C for 6 hours to 9 hours).

For example, the term "inert atmosphere" as used herein may mean a state where an inert gas (e.g., nitrogen ($N_2$) gas or argon (Ar) gas) is continuously purged into a chamber in which the composite particles 50 are contained.

The term "peak intensity" as used herein may mean a peak height in an XRD analysis graph in which a horizontal axis is 2θ and a vertical axis is the peak intensity.

In some embodiments, the C/SiC peak intensity ratio may be controlled by a hydrogen reduction temperature (first calcination temperature) of the carbon-based particles 60, a content of hydrogen in a hydrogen-containing gas, a content of silicon source in a silicon-containing gas, a silicon deposition temperature (second calcination temperature), a calcination time and the like.

In some embodiments, the silicon included in the silicon-containing coating 70 may have a crystal grain size of 10 nm or less, and in some embodiments, 9 nm or less, or 8 nm or less, which is measured through the XRD analysis after performing heat treatment on the composite particles 50 at 900 °C to 1200 °C for 6 hours to 9 hours.

In some embodiments, the heat treatment may be performed in substantially the same manner as the C/SiC peak intensity ratio measurement.

For example, even if silicon particles have a relatively small crystal grain size or an amorphous structure, the silicon internal domains may be aggregated or crystallized according to the repeated charging/discharging of the secondary battery or an increase in the temperature due to external heat.

Within the crystal grain size range of the present disclosure, the crystal grain size of the silicon after heat treatment may be controlled, thereby improving the lifespan characteristics under the high-temperature environment or during repeated charging and discharging. For example, the crystal grain size of the silicon after heat treatment may be proportional to an internal domain size of the silicon.

In some embodiments, the crystal grain size of the silicon included in the silicon-containing coating 70 may be determined through the Scherrer equation represented by Equation 2 below among XRD analysis methods.

[Equation 2]

$$L = \frac{0.9\lambda}{\beta cos\theta}$$

In Equation 2, L represents the grain size (nm), $\lambda$ represents an X-ray wavelength (nm), $\beta$ represents a full width at half maximum (rad) of the corresponding peak, and $\theta$ represents the diffraction angle (rad). According to embodiments, the full width at half maximum in the XRD analysis for determining the grain size may be measured from the peak of a (111) plane of the silicon included in the silicon-containing coating layer.

In some embodiments, $\beta$ in Equation 2 above may use the full width at half maximum corrected for a value derived from equipment. In an embodiment, Si may be used as a standard material for reflecting the equipment-derived value. In this case, by plotting full width at half maximum profiles in a full range of $2\theta$ of Si, the equipment-derived full width at half maximum may be represented as a function of $2\theta$. Thereafter, a value corrected by subtracting the equipment-derived full width at half maximum value in the corresponding $2\theta$ obtained from the above function may be used as $\beta$.

In some embodiments, the silicon included in the silicon-containing coating 70 after heat treatment may include an amorphous structure. Accordingly, the lifespan characteristics under the high-temperature environment or during repeated charging and discharging may be improved.

The term "amorphous structure" as used herein may mean a case where the shape of single silicon included in the silicon-containing coating 70 is amorphous or a case where the silicon is fine particles so small that it is difficult to measure the size through the Scherrer equation represented by Equation 2 above.

In an embodiment, the crystal grain size of the silicon after heat treatment may be controlled according to the size of the pores 65 of the carbon-based particle 60, the content of the silicon source in the deposition gas (e.g., silicon-containing gas) used in the preparation process, the calcination temperature, the calcination time and the like.

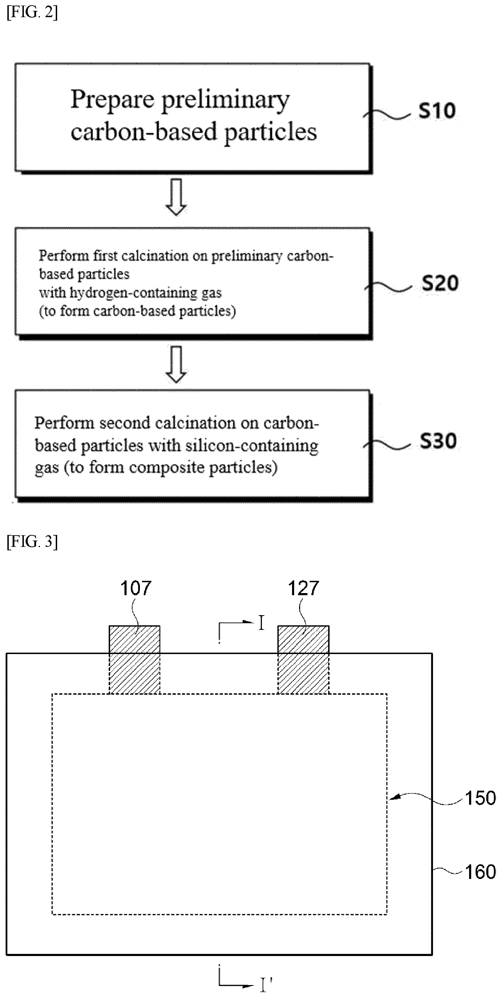

FIG. 2 is a flowchart for describing processes in a method of preparing an anode active material for a lithium secondary battery according to embodiments.

Referring to FIG. 2, preliminary carbon-based particles including pores 65 may be prepared (e.g., step S10). The preliminary carbon-based particles may represent carbon-based particles which are not subjected to hydrogen reduction treatment.

In some embodiments, the preliminary carbon-based particles may be formed by mixing a carbon-based particle source and an additive, followed by pre-calcining and washing the mixture.

In an embodiment, the carbon-based particle source may include at least one selected from the group consisting of glucose, sucrose, cellulose, petroleum pitch, coal pitch, biomass and resol oligomer.

In some embodiments, the additive may be provided as chemical etchant or hard templates.

In an embodiment, the chemical etchant may include basic and/or acidic agents such as potassium hydroxide (KOH), potassium acetate, potassium carbonate ($K_2CO_3$), sodium hydroxide (NaOH), sodium carbonate ($Na_2CO_3$), ammonia water ($NH_4OH$), sulfuric acid ($H_2SO_4$), etc. These may be used alone or in combination of two or more thereof. For example, a reaction between the carbon-based particle source and the additive may be performed through a chemical activation method. Specifically, the chemical etching agent acts as an activating agent, reacting with the carbon-based particle source to form a porous structure and release gases such as CO, CO2, CH4, or H2. For instance, potassium hydroxide (KOH) reacts with the carbon-based particle source to form potassium oxides or potassium carbonates.

In an embodiment, the hard template may include silica, polystyrene, etc. These may be used alone or in combination of two or more thereof. The hard template may be provided as, for example, an additive for forming pores. For example, the size of the pores 65 may be adjusted according to the particle size of the hard templates.

In an embodiment, the pre-calcination may be performed at 600 °C to 900 °C. Within the above range, the size and/or volume of the pores 65 may be appropriately controlled.

In an embodiment, the calcination may be performed by adding an acidic solution or a basic solution to the mixture. For example, the acidic solution may include a hydrochloric acid (HCl) solution, a sulfuric acid ($H_2SO_4$) solution, etc. For example, the basic solution may include a NaOH solution, etc.

In an embodiment, first calcination may be performed on the preliminary carbon-based particles with a hydrogen-containing gas to form the carbon-based particles 60 (for example, step S20). Accordingly, oxygen-containing functional groups on the surface of the preliminary carbon-based particles are removed/reduced, such that the formation of SiC due to the high temperature or the repeated charging and discharging may be suppressed. Accordingly, the output characteristics, capacity characteristics and lifespan characteristics of the lithium secondary battery may be enhanced.

For example, the first calcination may be performed on the preliminary carbon-based particles placed in a chamber while introducing the hydrogen-containing gas therein.

In some embodiments, the hydrogen-containing gas may include a hydrogen ($H_2$) gas and an inert gas. For example, the inert gas may include an argon (Ar) gas.

In some embodiments, a content of the hydrogen gas may be 1% by volume ("vol%") to 50 vol%, 3 vol% to 30 vol%, 5 vol% to 20 vol%, or 10 vol% to 15 vol% based on a total volume of the hydrogen-containing gas. Within the above range, the SiC phase contained in the composite particles before heat treatment may be sufficiently removed. Accordingly, growth of the SiC phase at a high temperature is suppressed, such that a decrease in the lifespan characteristics due to the high temperature or the repeated charging and discharging may be inhibited.

In some embodiments, the first calcination may be performed at a temperature of 300 °C to 700 °C, and in an embodiment, may be performed at 500 °C to 700 °C. Within the above range, the SiC phase contained in the composite particle before heat treatment may be sufficiently removed. Accordingly, the growth of the SiC phase at a high temperature is suppressed, such that the decrease in the lifespan characteristics due to the high temperature environment or the repeated charging and discharging may be inhibited.

In an embodiment, second calcination may be performed on the carbon-based particles 60 with a silicon-containing gas to form the composite particles 50 which include the silicon-containing coating 70 formed on the surface of the carbon-based particles 60 (for example, step S30).

For example, the second calcination may be performed on the carbon-based particles 60 placed in a chamber while introducing the silicon-containing gas therein.

In some embodiments, the silicon-containing gas may include a silane gas and an inert gas. For example, the inert gas may include an argon (Ar) gas.

In some embodiments, a volume of the silane gas based on the total volume of the silicon-containing gas may be 10 vol% to 70 vol%, 20 vol% to 70 vol%, 20 vol% to 50 vol%, or 30 vol% to 50 vol%. Within the above range, the domain size of the silicon included in the silicon-containing coating 70 before heat treatment may be decreased. Accordingly, the crystal grain size of the silicon after heat treatment may be decreased.

In some embodiments, the second calcination may be performed at a temperature of 400 °C to 600 °C. Within the above range, the crystal grain size of the silicon included in the silicon-containing coating 70 before heat treatment may be decreased. Accordingly, mechanical stability of the anode active material during a press process or the repeated charging and discharging of the secondary battery may be improved.

The C/SiC peak intensity ratio of the composite particles 50 formed by the above-described method after performing heat treatment on the composite particles 50 may be 1.0 to 4.5.

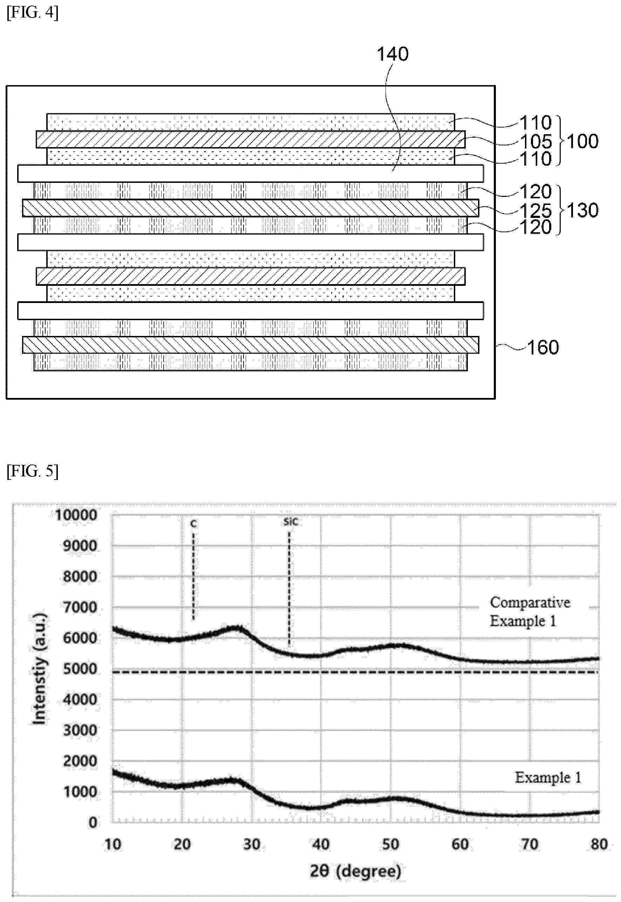

FIGS. 3 and 4 are a schematic plan view and a cross-sectional view illustrating a lithium secondary battery according to embodiments, respectively. For example, FIG. 4 is a cross-sectional view taken on line I-I' of FIG. 3 in a thickness direction of the lithium secondary battery.

The lithium secondary battery may include an anode 130 including the above-described anode active material and a cathode 100 disposed to face the anode 130.

The cathode 100 may include a cathode current collector 105, and a cathode active material layer 110 formed on at least one surface of the cathode current collector 105.

The cathode current collector 105 may include stainless steel, nickel, aluminum, titanium or an alloy thereof. The cathode current collector 105 may also include aluminum or stainless steel subjected to surface treatment with carbon, nickel, titanium or silver. For example, the cathode current collector 105 may have a thickness of 10 to 50 $\mu$m.

The cathode active material layer 110 may include a cathode active material. The cathode active material may include a compound capable of reversibly intercalating and deintercalating lithium ions.

According to embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or crystal structure represented by Formula 1 below.

[Formula 1] $\qquad$ $Li_xNi_aM_bO_{2+z}$

In Formula 1, x, a, b and z may be in a range of $0.9 \leq x \leq 1.2$, $0.6 \leq a \leq 0.99$, $0.01 < b \leq 0.4$, $-0.5 \leq z \leq 0.1$, respectively. As described above, M may include Co, Mn and/or Al.

The chemical structure represented by Formula 1 indicates a bonding relationship between elements included in the layered structure or crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing introduction and substitution of the additional elements.

In an embodiment, the cathode active material may further include auxiliary elements which are added to the main active elements, to enhance chemical stability thereof or the layered structure/crystal structure. The auxiliary element may be incorporated into the layered structure/crystal structure together to form a bond, and it should be understood that this case is also included within the chemical structure range represented by Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may act as an auxiliary active element which contributes to the capacity/output activity of the cathode active material together with Co or Mn like Al.

For example, the cathode active material or the lithium-nickel metal oxide may include a layered structure or crystal structure represented by Formula 1-1 below.

$$[\text{Formula 1-1}] \qquad \text{Li}_x\text{Ni}_a\text{M1}_{b1}\text{M2}_{b2}\text{O}_{2+z}$$

In Formula 1-1, M1 may include Co, Mn and/or Al. M2 may include the above-described auxiliary elements. In Formula 1-1, x, a, b1, b2 and z may satisfy $0.9 \leq x \leq 1.2$, $0.6 \leq a \leq 0.99$, $0.01 \leq b1+b2 \leq 0.4$, $-0.5 \leq z \leq 0.1$.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of the lithium-nickel metal oxide particles, or may penetrate through the surface of the lithium-nickel metal oxide particles to be included in the bonding structure represented by Formula 1 or Formula 1-1 above.

The cathode active material may include a nickel-cobalt-manganese (NCM)-based lithium oxide. In this case, an NCM-based lithium oxide with an increased content of nickel may be used.

Ni may be provided as a transition metal related to the output and capacity of the lithium secondary battery. Therefore, as described above, by employing a high-content (High-Ni) composition in the cathode active material, a high-capacity cathode and a high-capacity lithium secondary battery may be provided.

However, as the content of Ni is increased, long-term storage stability and lifespan stability of the cathode or the secondary battery may be relatively decreased, and a side reaction with the electrolyte may also be increased. However, according to embodiments, the lifespan stability and capacity retention characteristics may be improved through Mn while maintaining electrical conductivity by including Co.

The content of Ni (e.g., a mole fraction of nickel based on the total number of moles of nickel, cobalt and manganese) in the NCM-based lithium oxide may be 0.5 or more, 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., $\text{LiFePO}_4$).

In some embodiments, the cathode active material may include, for example, a Li-rich layered oxide (LLO)/over-lithiated oxide (OLO)-based active material, an Mn-rich active material, a Co-less active material, and the like, which have a chemical structure or crystal structure represented by Formula 2 below. These may be used alone or in combination of two or more thereof.

$$[\text{Formula 2}] \qquad p[\text{Li}_2\text{MnO}_3] \cdot (1-p)[\text{Li}_q\text{JO}_2]$$

In Formula 2, p and q are in a range of $0 < p < 1$, $0.9 \leq q \leq 1.2$, respectively, and J may include at least one element among Mn, Ni, Co, Fe, Cr, V, Cu, Zn, Ti, Al, Mg and B.

The cathode active material may be mixed in a solvent to prepare a cathode slurry. The cathode slurry may be applied to at least one surface of the cathode current collector 105, followed by drying and pressing the same to prepare the cathode active material layer 110. The coating may include a method such as gravure coating, slot die coating, simultaneous multilayer die coating, imprinting, doctor blade coating, dip coating, bar coating or casting. The cathode active material layer 110 may further include a binder, and optionally further include a conductive material, a thickener or the like.

As the solvent, N-methyl-2-pyrrolidone (NMP), dimethylformamide, dimethylacetamide, N,N-dimethylaminopropylamine, ethylene oxide, tetrahydrofuran, and the like may be used.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) and the like. These may be used alone or in combination of two or more thereof.

In an embodiment, a PVDF-based binder may be used as the cathode binder. In this case, the amount of binder for forming the cathode active material layer 110 may be decreased and the amount of the cathode active material may be relatively increased. Accordingly, the output characteristics and capacity characteristics of the secondary battery may be improved.

The conductive material may be added to the cathode active material layer 110 in order to enhance the conductivity thereof and/or the mobility of lithium ions or electrons. For example, the conductive material may include a carbon-based conductive material such as graphite, carbon black, acetylene black, Ketjen black, graphene, carbon nanotubes (CNTs), vapor-grown carbon fibers (VGCFs), carbon fibers, and/or a metal-based conductive material including tin, tin oxide, titanium oxide, or a perovskite material such as $LaSrCoO_3$, and $LaSrMnO_3$. These may be used alone or in combination of two or more thereof.

The cathode slurry may further include a thickener and/or dispersant. In an embodiment, the cathode slurry may include a thickener such as carboxymethyl cellulose (CMC).

The anode 130 may include an anode current collector 125 and an anode active material layer 120 formed on at least one surface of the anode current collector 125.

For example, the anode current collector 125 may include a copper foil, a nickel foil, a stainless steel foil, a titanium foil, a nickel foam, a copper foam, a polymer substrate coated with a conductive metal and the like. These may be used alone or in combination of two or more thereof. For example, the anode current collector 125 may have a thickness of 10 to 50 $\mu$m.

The anode active material layer 120 may include an anode active material including the above-described composite particles 50. For example, the anode active material may include a plurality of composite particles 50.

In some embodiments, the anode active material may include the composite particles 50 and a graphite-based active material. For example, the graphite-based active material may include artificial graphite and/or natural graphite.

The graphite-based active material may represent an active material which contains graphite and does not contain a silicon element.

A content of the composite particles 50 may be 1% by weight ("wt%") or more, 3 wt% or more, 5 wt% or more, 10 wt% or more, 15 wt% or more, 20 wt% or more, 25 wt% or more, 30 wt% or more, 35 wt% or more, 40 wt% or more, or 45 wt% or more based on a total weight of the anode active material (e.g., a total weight of the plurality of composite particles 50 and the graphite-based active material).

The content of the composite particles may be 90 wt% or less, 85 wt% or less, 80 wt% or less, 75 wt% or less, 70 wt% or less, 65 wt% or less, 60 wt% or less, 55 wt% or less, or 50 wt% or less based on the total weight of the anode active material.

In an embodiment, the anode active material may be substantially composed of the composite particles 50 and the graphite-based active material.

The anode active material may be mixed in a solvent to prepare an anode slurry. The anode slurry may be applied/deposited to the anode current collector 125, followed by drying and pressing the same to prepare an anode active material layer 120. The coating may include a method such as gravure coating, slot die coating, simultaneous multilayer die coating, imprinting, doctor blade coating, dip coating, bar coating or casting. The anode active material layer 120 may further include a binder, and optionally further include a conductive material, a thickener or the like.

The solvent included in the anode slurry may include water, pure water, deionized water, distilled water, ethanol, isopropanol, methanol, acetone, n-propanol, t-butanol and the like. These may be used alone or in combination of two or more thereof.

The above-described materials that can be used when manufacturing the cathode 100 as the binder, conductive material and thickener may be used.

In some embodiments, a styrene-butadiene rubber (SBR)-based binder, carboxymethyl cellulose (CMC), polyacrylic acid-based binder, poly(3,4-ethylenedioxythiophene, PEDOT)-based binder, and the like may be used as an anode binder. These may be used alone or in combination of two or more thereof.

In some embodiments, a separation membrane 140 may be interposed between the cathode 100 and the anode 130. The separation membrane 140 may be configured to prevent an electrical short-circuit between the cathode 100 and the anode 130, and to allow a flow of ions to occur. For example, the separation membrane may have a thickness of 10 to 20 $\mu$m.

For example, the separation membrane 140 may include a porous polymer film or a porous nonwoven fabric.

The porous polymer film may include a polyolefin polymer such as an ethylene polymer, a propylene polymer, an ethylene/butene copolymer, an ethylene/hexene copolymer, and an ethylene/methacrylate copolymer, etc. These may be used alone or in combination of two or more thereof.

The porous nonwoven fabric may include glass fibers having a high melting point, polyethylene terephthalate fibers and the like.

The separation membrane 140 may also include a ceramic-based material. For example, inorganic particles may be applied to the polymer film or dispersed within the polymer film to improve heat resistance.

The separation membrane 140 may have a single-layer or multi-layer structure including the above-described polymer film and/or non-woven fabric.

According to embodiments, an electrode cell is defined by the cathode 100, the anode 130 and the separation membrane 140, and a plurality of electrode cells are stacked to form, for example, a jelly roll type electrode assembly 150. For example, the electrode assembly 150 may be formed by winding, stacking, z-folding, stack-folding, and the like of the separation membrane 140.

The electrode assembly 150 may be housed in a case 160 together with an electrolyte to define a lithium secondary battery. According to embodiments, a non-aqueous electrolyte may be used as the electrolyte.

The non-aqueous electrolyte includes a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2$ $(CF_3)_2CO^-$, $(CF_3SO_2)_2CH^-$, $(SF_5)_3C^-$, $(CF_3SO_2)_3C^-$, $CF_3(CF_2)_7SO3^-$, $CF_3CO_2^-$, $CH_3CO_2^-$, $SCN^-$ and $(CF_3CF_2SO_2)_2N^-$, etc. may be utilized.

As the organic solvent, for example, propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfur oxide, acetonitrile, diethoxyethane, sulfolane, gamma-butyrolactone, and propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis-oxalato phosphate, lithium difluoro phosphate, etc.

The borate compound may include lithium bis(oxalate) borate, etc.

In some embodiments, a solid electrolyte may be used instead of the above-described non-aqueous electrolyte. In this case, the lithium secondary battery may be manufactured in the form of an all-solid-state battery. In addition, a solid electrolyte layer may be disposed between the cathode 100 and the anode 130 instead of the above-described separation membrane 140.

The solid electrolyte may include a sulfide-based electrolyte. As a non-limiting example, the sulfide-based electrolyte may include $Li_2S$-$P_2S_5$, $Li_2S$-$P_2S_5$-LiCl, $Li_2S$-$P_2S_5$-LiBr, $Li_2S$-$P_2S_5$-LiCl-LiBr, $Li_2S$-$P_2S_5$-Li2O, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (m and n are positive numbers, Z is Ge, Zn or Ga), $Li_2S$-$GeS_2$, $Li_2S$-$SiS_2$-$Li_3PO_4$, $Li_2S$-$SiS_2$-$Li_pMO_q$ (p and q are positive numbers, M is P, Si, Ge, B, Al, Ga or In), $Li_7$-$xPS_6$-$xCl_x$ ($0{\leq}x{\leq}2$), $Li_7$-$xPS_6$-$xBr_x$ ($0{\leq}x{\leq}2$), $Li_7$-$xPS_6$-$xI_x$ ($0{\leq}x{\leq}2$), etc. These may be used alone or in combination of two or more thereof.

In an embodiment, the solid electrolyte may include an oxide-based amorphous solid electrolyte, such as, for example, $Li_2O$-$B_2O_3$-$P_2O_5$, $Li_2O$-$SiO_2$, $Li_2O$-$B_2O_3$, $Li_2O$-$B_2O_3$-ZnO, etc.

As shown in FIGS. 3 and 4, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) extending or exposed to an outside of the case 160.

The lithium secondary battery may be manufactured, for example, in a cylindrical shape using a can, a square shape, a pouch shape or a coin shape.

**Example 1**

Preparation of preliminary carbon-based particles (step S10)

Coconut shells were dried to remove moisture, purged with argon, and pre-calcined (carbonized) at 700 °C for 6 hours. The pre-calcined particles were activated at 500 °C while introducing steam to prepare activated carbon having a specific surface area of 1500 m$^2$/g and a pore volume of 0.7 cm$^3$/g as preliminarily carbon-based particles.

Preparation of carbon-based particles (step S20)

First calcination was performed on the preliminary carbon-based particles placed in a chamber at 600 °C while introducing a hydrogen-containing gas including hydrogen gas and argon gas in a volume ratio of 1:9 therein to form carbon-based particles.

Preparation of silicon-containing coating (step S30)

The carbon-based particles were placed in a CVD coater, and silicon-containing gas including silane ($SiH_4$) gas and argon gas in a volume ratio of 1:9 was injected into the CVD coater at a flow rate of 50 mL/min to 100 mL/min.
The temperature of the CVD coater was increased to 400 °C at a heating rate of 5 °C/min to 20 °C/min, and then maintained at 400 °C for about 120 minutes (second calcination) to prepare composite particles including a silicon-containing coating.

Formation of anode

95.5 wt% of an anode active material mixed with 15 wt% of the composite particles and 80.5 wt% of artificial graphite, 1 wt% of carbon nanotubes (CNTs) as a conductive material, 2 wt% of styrene-butadiene rubber (SBR) as a binder, and 1.5 wt% of carboxymethyl cellulose (CMC) as a thickener were mixed to obtain an anode slurry.
The anode slurry was applied to a copper substrate, followed by drying and pressing the same to prepare an anode.

Manufacturing of lithium (Li) half-cell

A lithium half-cell including the prepared anode and using lithium (Li) metal as a counter electrode (cathode) was manufactured.
Specifically, a lithium coin half-cell of CR2016 (diameter 20 mm, thickness 1.6 mm) standard was manufactured by interposing a separation membrane (polyethylene, thickness 20 $\mu$m) between the prepared anode and lithium metal (thickness 1.6 mm).
A combination of lithium metal/separation membrane/anode was put in a coin cell plate, an electrolyte was injected, and then a cap was covered and clamped. The electrolyte used herein was prepared by adding 2.0 vol % of fluoroethylene carbonate (FEC) based on the total volume of the electrolyte to a 1M $LiPF_6$ solution formed using a mixed solvent of EC/EMC (3:7; volume ratio). The manufactured lithium half-cell was impregnated for 3 hours to 24 hours after clamping, then 3 cycles of charging and discharging at 0.1C were performed thereon (charging condition: CC-CV 0.1C 0.01 V 0.01C CUT-OFF, discharging condition: CC 0.1C 1.5 V CUT-OFF).

**Examples 2 to 12, and Comparative Examples 2 to 4**

Composite particles and lithium half-cells were manufactured according to the same procedures as described in Example 1, except that the temperature of the first calcination, the content of hydrogen gas in the total volume of hydrogen-containing gas, and the temperature of the second calcination were changed as shown in Table 2.

**Comparative Example 1**

Composite particles and a lithium half-cell were manufactured according to the same procedures as described in Example 1, except that the preliminary carbon-based particles were used as the carbon-based particles without the introduction of hydrogen-containing gas.

**Experimental Example**

(1) Measurement of C/SiC peak intensity ratio before heat treatment

XRD analysis was performed on the composite particles prepared according to the above-described examples and comparative examples without a separate heat treatment to obtain a graph in which the vertical axis represents the peak intensity and the horizontal axis represents $2\theta$ (diffraction angle).

In the graph, a maximum peak intensity in a $2\theta$ range of 20° to 23° measured through the XRD analysis was set to I(C), and a maximum peak intensity in a $2\theta$ range of 34° to 37° measured through the XRD analysis was set to I(SiC).

The I(C) and I(SiC) were substituted into Equation 1 to measure a C/SiC peak intensity ratio before heat treatment.

FIG. 5 is an XRD analysis graph of Example 1 and Comparative Example 1 before heat treatment. In FIG. 5, the measured I(SiC) and I(C) were represented in the graph in which the vertical axis represents the peak intensity and the horizontal axis represents $2\theta$ (diffraction angle).

(2) Measurement of C/SiC peak intensity ratio after heat treatment

The composite particles prepared according to the above-described Examples and Comparative Examples were subjected to heat treatment at 900 °C for 6 hours, and then naturally cooled to room temperature (25 °C). Thereafter, the C/SiC peak intensity ratio of the composite particles was measured according to the same procedures as described in Experimental Example (1).

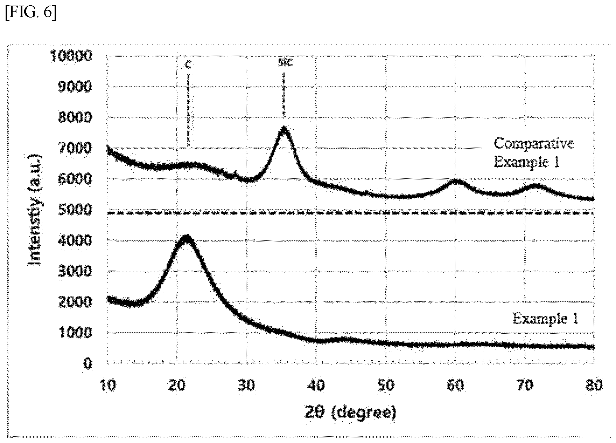

FIG. 6 is an XRD analysis graph of Example 1 and Comparative Example 1 after heat treatment. In FIG. 6, the measured I(SiC) and I(C) were represented in the graph in which the vertical axis represents the peak intensity and the horizontal axis represents $2\theta$ (diffraction angle).

Referring to FIGS. 5 and 6, in Example 1, the SiC peak intensity was small even after heat treatment, but in Comparative Example 1, the SiC peak intensity was significantly increased after heat treatment.

Meanwhile, specific XRD analysis equipment/conditions are as described in Table 1 below.

[TABLE 1]

| XRD (X-Ray Diffractometer) EMPYREAN | |
| --- | --- |
| Maker | PANalytical |
| Anode material | Cu |
| K-Alpha1 wavelength | 1.540598 Å |
| Generator voltage | 45 kV |
| Tube current | 40 mA |
| Scan range | 10-120° |
| Scan step size | 0.0065° |
| Divergence slit | 1/4° |
| Antiscatter slit | 1/2° |

(3) Measurement of whether the silicon is amorphous and grain size after heat treatment

The composite particles prepared according to the above-described examples and comparative examples were subjected to heat treatment at 900 °C for 6 hours, and then naturally cooled to room temperature (25 °C). Thereafter, XRD analysis was performed on the composite particles and the grain size was calculated using Equation 2.

When the grain size of silicon was so small that it was difficult to measure through the XRD analysis, it was indicated as amorphous in Table 2.

(4) Measurement of initial discharge capacity and initial efficiency

Charging (CC-CV 0.1C 0.01V 0.01C CUT-OFF) and discharging (CC 0.1C 1.5 V CUT-OFF) were respectively performed on the lithium half-cells manufactured according to the examples and comparative examples once at room temperature (25°C) to measure an initial charge capacity and an initial discharge capacity.

The initial efficiency was evaluated by dividing the initial discharge amount by the initial charge amount measured above and multiplying by 100.

(5) Evaluation of capacity retention rate (50 cycles)

Charging (CC-CV 0.1C 0.01 V 0.01C CUT-OFF) and discharging (CC 0.1C 1.5 V CUT-OFF) were respectively performed on the lithium half-cells manufactured according to the examples and comparative examples 50 times at room temperature (25°C) to measure a discharge capacity at 50th cycle. The capacity retention rate was evaluated by dividing the discharge capacity at 50th cycle measured above by the initial discharge capacity and multiplying by 100.
Measurement and evaluation results are shown in Tables 2 and 3 below.
In addition, the temperature of the first calcination, the content of hydrogen gas in the total volume of hydrogen-containing gas, the temperature of the second calcination, the C/SiC peak intensity ratio before heat treatment, the C/SiC peak intensity ratio after heat treatment, and the silicon crystal grain size after heat treatment are shown in Table 2. The initial discharge capacity, initial efficiency and capacity retention rate are shown in Table 3.

[TABLE 2]

| | First calcination temperature (°C) | Hydrogen gas content (Volume %) | Second calcination temperature (°C) | C/SiC peak intensity ratio before heat treatment | C/SiC peak intensity ratio after heat treatment | Crystal grain size of silicon after heat treatment (nm) |
|---|---|---|---|---|---|---|
| Example 1 | 600 | 10 | 400 | 2.0 | 4.1 | Amorphous |
| Example 2 | 300 | 10 | 400 | 2.0 | 1.0 | Amorphous |
| Example 3 | 400 | 10 | 400 | 1.9 | 1.5 | Amorphous |
| Example 4 | 500 | 10 | 400 | 2.0 | 2.9 | Amorphous |
| Example 5 | 700 | 10 | 400 | 2.1 | 4.5 | Amorphous |
| Example 6 | 250 | 20 | 400 | 1.8 | 1.1 | Amorphous |
| Example 7 | 750 | 5 | 400 | 2.0 | 4.5 | Amorphous |
| Example 8 | 600 | 10 | 500 | 2.0 | 4.0 | 8 |
| Example 9 | 600 | 10 | 600 | 2.1 | 4.1 | 10 |
| Example 10 | 600 | 10 | 350 | 1.9 | 3.9 | 12 |
| Example 11 | 600 | 10 | 650 | 2.0 | 3.8 | 15 |
| Example 12 | 800 | 10 | 350 | 2.0 | 4.5 | 13 |
| Comparative Example 1 | - | - | 400 | 1.9 | 0.6 | Amorphous |
| Comparative Example 2 | 200 | 10 | 400 | 2.0 | 0.8 | Amorphous |
| Comparative Example 3 | 900 | 10 | 250 | 2.1 | 4.8 | 55 |
| Comparative Example 4 | 600 | 5 | 380 | 2.1 | 4.6 | 9 |

[TABLE 3]

| | Initial discharge capacity (mAh/g) | Initial efficiency (%) | Capacity retention rate (%, 50 cycles) |
|---|---|---|---|
| Example 1 | 1746 | 93 | 95 |
| Example 2 | 1720 | 91 | 92 |
| Example 3 | 1734 | 92 | 92 |
| Example 4 | 1775 | 93 | 94 |
| Example 5 | 1764 | 92 | 94 |
| Example 6 | 1709 | 90 | 90 |
| Example 7 | 1765 | 89 | 95 |

(continued)

| | Initial discharge capacity (mAh/g) | Initial efficiency (%) | Capacity retention rate (%, 50 cycles) |
|---|---|---|---|
| Example 8 | 1751 | 92 | 93 |
| Example 9 | 1744 | 93 | 93 |
| Example 10 | 1710 | 91 | 89 |
| Example 11 | 1728 | 89 | 94 |
| Example 12 | 1640 | 90 | 88 |
| Comparative Example 1 | 1650 | 87 | 74 |
| Comparative Example 2 | 1674 | 88 | 76 |
| Comparative Example 3 | 1574 | 89 | 71 |
| Comparative Example 4 | 1688 | 86 | 78 |

Referring to Tables 2 and 3, in the examples where the C/SiC peak intensity ratio after heat treatment was 1.0 to 4.5, the initial discharge capacity, initial efficiency and capacity retention rate were improved as a whole compared to the comparative examples.

In the examples and comparative examples, the C/SiC peak intensity ratio before heat treatment was similar to each other, but in the examples, the formation and growth of SiC were suppressed even after heat treatment compared to the comparative examples.

In Example 6 where the temperature of the first calcination was less than 300 °C, the initial discharge capacity and capacity retention rate were relatively decreased compared to the other examples.

In Example 7 where the temperature of the first calcination exceeded 700 °C, the initial efficiency was relatively decreased compared to the other examples.

In Example 10 where the temperature of the second calcination was less than 400 °C, the initial discharge capacity and the capacity retention rate were relatively decreased compared to the other examples.

In Example 11 where the temperature of the second calcination exceeded 600 °C, the initial efficiency was relatively decreased compared to the other examples.

In Examples 10 to 12 where the crystal grain size of the silicon exceeded 10 nm, the initial discharge capacity, initial efficiency, and/or capacity retention rate were relatively decreased compared to the other examples.

[Description of Reference Numerals]

50: Composite particle
60: Carbon-based particle
62: Outer surface of carbon-based particle
65: Pore
67: Inner surface of pore
70: Silicon-containing coating
100: Cathode
105: Cathode current collector
107: Cathode lead
110: Cathode active material layer
120: Anode active material layer
125: Anode current collector
127: Anode lead
130: Anode
140: Separation membrane
150: Electrode assembly
160: Case

**Claims**

1. An anode active material for a lithium secondary battery comprising:

   composite particles which comprise a silicon-containing coating formed on a surface of carbon-based particles comprising porous,
   wherein the composite particles have a C/SiC peak intensity ratio of 1.0 to 4.5, which is defined by Equation 1 below after performing heat treatment on the composite particles at 900 °C to 1200 °C for 6 hours to 9 hours:

   [Equation 1]

   $$C/SiC \text{ peak intensity ratio} = I(C)/I(SiC)$$

   wherein in Equation 1, I(C) is a maximum peak intensity in a 2θ range of 20° to 23° measured through X-ray diffraction (XRD) analysis, I(SiC) is a maximum peak intensity in a 2θ range of 34° to 37° measured through the XRD analysis, and 2θ is a diffraction angle (°).

2. The anode active material for a lithium secondary battery according to claim 1, wherein the C/SiC peak intensity ratio is 2.9 to 4.1.

3. The anode active material for a lithium secondary battery according to claims 1 or 2, wherein the heat treatment is performed on 1 g to 5 g of the composite particles in an inert atmosphere.

4. The anode active material for a lithium secondary battery according to any one of claims 1 to 3, wherein the pores of the carbon-based particles have a size of 0.1 nm to 10 nm.

5. The anode active material for a lithium secondary battery according to any one of claims 1 to 4, wherein the composite particles further comprise a carbon coating formed on the silicon-containing coating.

6. The anode active material for a lithium secondary battery according to any one of claims 1 to 5, wherein the pores of the carbon-based particles include a shape recessed from the outermost portion of the carbon-based particles into an inside of the carbon-based particles.

7. The anode active material for a lithium secondary battery according to any one of claims 1 to 6, wherein the silicon included in the silicon-containing coating has a crystal grain size of 10 nm or less, which is measured through the XRD analysis after performing heat treatment on the composite particles at 900 °C to 1200 °C for 6 hours to 9 hours.

8. The anode active material for a lithium secondary battery according to claim 7, wherein the crystal grain size of the silicon included in the silicon-containing coating is measured through Equation 2 below:

   [Equation 2]

   $$L = \frac{0.9\lambda}{\beta cos\theta}$$

   (wherein Equation 2, L is the grain size (nm), λ is an X-ray wavelength (nm), β is a full width at half maximum (rad) of a peak of a (111) plane of the silicon included in the silicon-containing coating, and θ is the diffraction angle (rad)).

9. The anode active material for a lithium secondary battery according to claim 7, wherein the grain size of the silicon included in the silicon-containing coating measured through the XRD analysis after heat treatment is 8 nm or less.

10. The anode active material for a lithium secondary battery according to any one of claims 1 to 9, wherein the silicon included in the silicon-containing coating after heat treatment includes an amorphous structure.

11. A lithium secondary battery comprising:

an anode which comprises the anode active material for a lithium secondary battery according to any one of claims 1 to 10; and
a cathode disposed to face the anode.

12. A method of preparing an anode active material for a lithium secondary battery, the method comprising:

preparing preliminary carbon-based particles including pores;
performing first calcination on the preliminary carbon-based particles with a hydrogen-containing gas to form carbon-based particles; and
performing second calcination on the carbon-based particles with a silicon-containing gas to form composite particles which comprise a silicon-containing coating formed on a surface of the carbon-based particles, wherein the composite particles have a C/SiC peak intensity ratio of 1.0 to 4.5, which is defined by Equation 1 below after performing heat treatment on the composite particles at 900 °C to 1200 °C for 6 hours to 9 hours:

[Equation 1]

$$\text{C/SiC peak intensity ratio} = I(C)/I(SiC)$$

(wherein Equation 1, I(C) is a maximum peak intensity in a $2\theta$ range of 20° to 23° measured through X-ray diffraction (XRD) analysis, I(SiC) is a maximum peak intensity in a $2\theta$ range of 34° to 37° measured through the XRD analysis, and $2\theta$ is a diffraction angle (°)).

13. The method according to claim 12, wherein the first calcination is performed at a temperature of 300 °C to 700 °C.

14. The method according to claims 12 or 13, wherein the second calcination is performed at a temperature of 400 °C to 600 °C.

[FIG. 1]

**50**

[FIG. 2]

Prepare preliminary carbon-based particles — S10

Perform first calcination on preliminary carbon-based particles with hydrogen-containing gas (to form carbon-based particles) — S20

Perform second calcination on carbon-based particles with silicon-containing gas (to form composite particles) — S30

[FIG. 3]

[FIG. 4]

[FIG. 5]

[FIG. 6]

# EUROPEAN SEARCH REPORT

**Application Number**

EP 25 16 4588

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 691 063 A (UNIV TSINGHUA) 12 March 2024 (2024-03-12) * paragraph [0078] - paragraph [0085] * ----- | 1-14 | INV. H01M4/02 |
| X | CN 116 314 651 A (SICHUAN WUKEJINGUI NEW MATERIAL TECH CO LTD) 23 June 2023 (2023-06-23) * [0037-41]; [0073-6] * ----- | 1-14 | |
| X | CN 114 068 901 A (SHAANXI COAL CHEMICAL IND TECH RES INST CO LTD) 18 February 2022 (2022-02-18) * paragraph [0056] - paragraph [0063] * ----- | 1-14 | |
| X | CN 116 504 986 A (BEIJING IAMETAL NEW ENERGY CO LTD ET AL.) 28 July 2023 (2023-07-28) * paragraph [0059] - paragraph [0067] * ----- | 1-14 | |
| E | EP 4 553 917 A1 (SK ON CO LTD [KR]) 14 May 2025 (2025-05-14) * paragraph [0148] - paragraph [0154]; figure 1 * ----- | 1-12 | **TECHNICAL FIELDS SEARCHED (IPC)** H01M |

The present search report has been drawn up for all claims

| Place of search | Date of completion of the search | Examiner |
|---|---|---|
| Munich | 11 July 2025 | Radeck, Stephanie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

**ANNEX TO THE EUROPEAN SEARCH REPORT
ON EUROPEAN PATENT APPLICATION NO.**

EP 25 16 4588

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2025

| Patent document cited in search report | | Publication date | Patent family member(s) | | Publication date |
|---|---|---|---|---|---|
| CN 117691063 | A | 12-03-2024 | NONE | | |
| CN 116314651 | A | 23-06-2023 | NONE | | |
| CN 114068901 | A | 18-02-2022 | NONE | | |
| CN 116504986 | A | 28-07-2023 | NONE | | |
| EP 4553917 | A1 | 14-05-2025 | CN | 119965236 A | 09-05-2025 |
| | | | EP | 4553917 A1 | 14-05-2025 |
| | | | KR | 20250066837 A | 14-05-2025 |
| | | | US | 2025149578 A1 | 08-05-2025 |

EPO FORM P0459

For more details about this annex : see Official Journal of the European Patent Office, No. 12/82